# EUROPÄISCHE PATENTSCHRIFT

(11) **EP 4 587 306 B1**
(45) Veröffentlichungstag und Bekanntmachung des Hinweises auf die Patenterteilung: **03.06.2026**
(21) Anmeldenummer: 23761891.3
(22) Anmeldetag: 25.08.2023
(51) Int. Cl.: B60T 13/66, B60T 17/22, G01D 5/00, B60T 13/74

(54) **DREHWINKELERFASSUNGSSYSTEM FÜR EINE DREHWINKELERFASSUNG EINES ROTATORISCHEN BREMSANTRIEBS FÜR EIN SCHIENENFAHRZEUG**
ROTATION ANGLE DETECTION SYSTEM FOR A ROTATION ANGLE DETECTION OF A ROTATORY BRAKE DRIVE FOR A RAIL VEHICLE
SYSTÈME DE DÉTECTION D'ANGLE DE ROTATION POUR UNE DÉTECTION D'ANGLE DE ROTATION D'UN ENTRAÎNEMENT DE FREIN ROTATIF POUR UN VÉHICULE FERROVIAIRE

(30) Priorität: 12.09.2022 DE 102022123084
(43) Veröffentlichungstag der Anmeldung: 23.07.2025
(73) Patentinhaber: KNORR-BREMSE Systeme für Schienenfahrzeuge GmbH, 80809 München (DE)
(72) Erfinder: JUNG, Alexander, 82131 Gauting (DE); FRIESEN, Ulf, 85579 Neubiberg (DE); LIU, Cheng, 81829 München (DE); GRUNDWÜRMER, Richard, 85053 Ingolstadt (DE)
(86) Internationale Anmeldenummer: PCT/EP2023/073363
(87) Internationale Veröffentlichungsnummer: WO 2024/056350

(56) Entgegenhaltungen:
- EP-A1- 3 078 876
- EP-A1- 3 858 688
- EP-A2- 0 982 210
- EP-A2- 0 984 190
- US-A1- 2017 182 984

## Beschreibung

Die vorliegende Erfindung betrifft ein Drehwinkelerfassungssystem für eine Drehwinkelerfassung eines rotatorischen Bremsantriebs für ein Schienenfahrzeug sowie ein Bremssystem für ein Schienenfahrzeug und ein Schienenfahrzeug mit einem solchen Drehwinkelerfassungssystem.

Bei Schienenfahrzeugen sind beispielsweise elektromechanische Bremsaktuatoren, wie Bremszylinder, derart gestaltet, dass mithilfe eines Elektromotors elektrische Energie in mechanische Energie umgewandelt wird. Wird der Bremsaktuator bzw. Bremszylinder angesteuert, kommt es im Elektromotor zu einer rotatorischen Bewegung des Rotors. Diese Drehbewegung wird weiter auf eine in einer Hohlwelle fest eingebaute Spindelmutter übertragen. Da die rotierende Spindelmutter in der axialen Richtung fest eingebaut ist, resultiert dies in einer Vorschubbewegung der Spindel. In einem weiteren Schritt kommt es mittels eines Exzenterwellenhebels zur Drehung einer Exzenterwelle und zur Betätigung der Zangenhebel. Entsprechend können die in Haltern befestigten Bremsbeläge durch die Zangenhebel zur Erzeugung einer Bremskraft an eine rotierende Bremsscheibe gedrückt werden. Zum Lösen der Bremse dreht der Elektromotor in der umgekehrten Richtung und stellt damit den Gewindetrieb zurück.

Für die Ansteuerung des Elektromotors, beispielsweise eine permanentmagneterregte Synchronmaschine oder auch kurz PMSM, wird ein Drehwinkelgeber zur Erfassung der Rotorlage eingesetzt. Das Bremsaktuatorgehäuse kann neben dem Drehwinkelgeber auch weitere Sensoren sowie elektrische und mechatronische Komponenten aufweisen, wie beispielsweise Endlagenschalter, Kraftmessringe oder Motorbremseinrichtungen. Aufgrund des möglichen Einbaus in einem Drehgestell ergeben sich erhöhte Anforderungen an die Hochspannungs- und Isolationsfestigkeit, auch HV/ISO-Festigkeit. Dies betrifft insbesondere eine erhöhte Systemspannung von 110 V anstatt 48 V, die für einen Bremsaktuator zum Einsatz kommen kann. Bei einem Typtest muss zum Beispiel für eine Dauer von 60 Sekunden eine HV/ICO-Festigkeit von 500 VAC bei 50 Hz oder 750 VDC bei 48 V erreicht werden, während diese bei 110 V 1000 VAC bei 50 Hz oder 1500 VDC sein muss. Zudem kann in diesem Beispiel für einen Stücktest für eine Dauer von 10 Sekunden eine HV/ISO-Festigkeit von 500 VAC bei 50 Hz oder 750 VDC bei 48 V und bei 110 V von 1000 VAC bei 50 Hz oder 1500 VDC gefordert sein. Die Anforderungen sind hier exemplarisch auf Konfigurationen anwendbar, bei denen keine vorherige Potentialtrennung erfolgt und beispielsweise direkt 110 V von den Schienenfahrzeugleitungen übermittelt werden. Entsprechende Prüfungen erfolgen zwischen dem Gehäuse der jeweiligen Komponenten und der Elektronik bzw. den stromführenden Bestandteilen, wie Wicklungen, Kabelausgängen und dergleichen.

Grundsätzlich kann eine höhere Spannungs-/Isolationsfestigkeit über die Erhöhung der Isolation zu den elektrisch leitenden Bauteilen und Kontaktflächen erreicht werden. Dies kann einerseits über erhöhte interne Isolationsabstände von spannungsführenden zu entsprechenden Gehäuseteilen der Sensoren realisiert werden, oder andererseits über den zusätzlichen und verstärkten Einsatz von nichtleitenden Materialien, zum Beispiel Kunststoff, erfolgen. So können bei elektrischen Leitungen beispielsweise die entsprechenden Drahtisolationen verstärkt werden, oder bei Elektronikplatinen können die Isolationsstrecken vergrößert sowie besser geeignete Bauteile für die höheren Spannungsklassen, wie ESD-Kondensatoren für 1 kV und mehr, ausgewählt werden.

Konkret weisen gerade viele Standardsensoren und -komponenten, die auf dem Markt verfügbar sind, nicht die geforderte hohe HV/ISO-Festigkeit auf, insbesondere im Hinblick auf die erhöhten Anforderungen bei einer Systemspannung von 110 V. Um diese erhöhte Anforderung zu erreichen, müssen kundenspezifische Anpassungen seitens der Hersteller vorgenommen werden, wie beispielsweise besser isolierte Wicklungsdrähte, Gehäuse mit Kunststoff-Ummantelung und/oder Austausch elektronischer Bauteile. In der Regel sind solche Eingriffe mit höherem Aufwand sowie steigenden Entwicklungskosten, höheren Stückpreisen und einer schlechteren Verfügbarkeit verbunden.

In letzter Konsequenz bewirken die aufgezählten Maßnahmen zur Erhöhung der HV-ISO-Festigkeit, dass am Sensor notwendige Modifikationen vorgenommen werden müssen, die nicht mehr dem Standardprodukt entsprechen. Dies bringt aber neben der Erfüllung der erhöhten Anforderungen an die HV-ISO-Festigkeit auch die genannten sowie weitere Nachteile mit sich. So können entsprechende Modifikationen aus technischer Sicht auch in kürzeren Haltbarkeiten bzw. Lebensdauern, beispielsweise bei Kunststoffgehäusen, und in einem größeren Bauraumbedarf, zum Beispiel durch dickere Drahtdurchmesser, resultieren. Auch kann durch solche Modifikationen der Anwendungsbereich eingeschränkt werden, da sich Einschränkungen bei möglichen Vibrationen bzw. Schockbelastungen, Begrenzungen im Temperaturprofil, Umweltbelastungen und/oder limitierte Einbausituationen ergeben können.

In diesem Zusammenhang betrifft die US 2017/182984 A1 ein elektrisches Bremssystem, bei dem u.a. ein Motorwinkel über einen Winkelsensor als eine Drehwinkelabschätzungsvorrichtung abgeschätzt wird.

Die EP 3 078 876 A1 betrifft eine elektrische Bremseinrichtung für ein Fahrzeug, wobei über einen Drehwinkelsensor eine Rotorposition eines elektrischen Motors detektiert wird.

Die EP 0 984 190 A2 betrifft ebenfalls eine elektrische Bremseinrichtung. Ein Drehwinkelsensor dient hier der Erfassung eines Drehwinkels einer Drehwelle.

Die EP 3 858 688 A1 betrifft eine elektrische Bremse mit einem Drehwinkelsensor zur Detektion einer Drehposition eines elektrischen Motors.

Die EP 0 982 210 A2 betrifft eine elektrische Bremsvorrichtung, wobei ein Drehwinkelsensor einen Drehwinkel einer Drehwelle eines Bremsmotors detektiert.

In Anbetracht der vorstehenden Ausführungen ist es somit Aufgabe der vorliegenden Erfindung, ein gegenüber dem Stand der Technik, insbesondere im Hinblick auf eine erhöhte Spannungs-/Isolationsfestigkeit bei möglichst einfacher und damit kostengünstiger Konfiguration, verbessertes Drehwinkelerfassungssystem zur Verfügung zu stellen.

Diese Aufgabe wird durch die Gegenstände der unabhängigen Ansprüche gelöst. Vorteilhafte Weiterbildungen sind Gegenstand der Unteransprüche.

Erfindungsgemäß weist ein Drehwinkelerfassungssystem für eine Drehwinkelerfassung eines rotatorischen Bremsantriebs für ein Schienenfahrzeug zumindest eine Sensoreinheit zur Erfassung eines Drehwinkels, die operativ mit dem rotatorischen Bremsantrieb verbindbar ist, sowie zumindest einen Elektronik-Hauptpfad zur Übertragung von Ansteuerungssignalen und/oder Sensorsignalen, wobei der zumindest eine Elektronik-Hauptpfad operativ mit der zumindest einen Sensoreinheit verbindbar ist, auf, wobei der zumindest eine Elektronik-Hauptpfad zumindest einen Signalübertrager aufweist, der den Elektronik-Hauptpfad in einen vom Signalübertrager aus der Sensoreinheit zugewandten Elektronik-Hauptpfadabschnitt und einen vom Signalübertrager aus der Sensoreinheit abgewandten Elektronik-Hauptpfadabschnitt unterteilt, und wobei der zumindest eine Signalübertrager dazu konfiguriert ist, die zumindest eine Sensoreinheit galvanisch von dem der Sensoreinheit abgewandten Elektronik-Hauptpfadabschnitt zu trennen.

Der Grundgedanke der vorliegenden Erfindung beruht darauf, die Realisierung der HV/ISO-Festigkeit in einen anderen Bereich der Systemkette zu verschieben. Demnach muss beispielweise die Sensoreinheit oder ein entsprechender Sensor der Sensoreinheit nicht modifiziert werden und kann somit weiterhin als Standardprodukt ausgeführt werden, sondern die Sensoreinheit oder der entsprechende Sensor wird in einem Elektronik Hauptpfad als Signal- und/oder Ansteuerungspfad für die Sensoreinheit, beispielsweise in Form von elektrischen Zuleitungen, galvanisch getrennt. Als zur galvanischen Trennung vorgesehener Signalübertrager kann ein Bauteil verwendet werden, das konstruktiv wesentlich einfacher und damit kostengünstiger eine anforderungsgerechte HV/ISO-Festigkeit bereitstellen kann. Damit kann auf einfachere Weise die übrige Elektronik im Gesamtsystem den höheren Anforderungen entsprechend galvanisch isoliert werden.

Die operative Verbindbarkeit bzw. Konnektivität des Elektronik-Hauptpfads betrifft sowohl eine direkte als auch indirekte Verbindung der Einzelpfade zur Signalübertragung. Zudem kann sich die operative Verbindung auch auf eine tatsächliche Aktivierung des Elektronik-Hauptpfads bzw. von Komponenten im Elektronik-Hauptpfad, wie beispielsweise eine Signalaufbereitungseinheit, beziehen. Mit anderen Worten kann der zumindest eine Elektronik-Hauptpfad beispielsweise konstant physisch mit der Sensoreinheit verbunden sein, wobei eine operative Verbindung streng genommen erst mit Aktivierung der entsprechenden Signalaufbereitungseinheit erfolgt.

Die operative Verbindung der Sensoreinheit mit dem rotatorischen Bremsantrieb kann gleichermaßen eine direkte wie indirekte Verbindung umfassen. Die Verbindung kann mechanisch und/oder signaltechnisch erfolgen. Die Sensoreinheit kann somit sowohl im direkten Kontakt als auch über optische, akustische und/oder elektrische bzw. elektromagnetische Signale in Interaktion mit dem rotatorischen Bremsantrieb zumindest ein einen Drehwinkel repräsentierendes Signal generieren, das über den Elektronik-Hauptpfad an eine jeweilige Signalaufbereitungseinheit oder dergleichen weitergeleitet werden kann.

Gemäß einer Ausgestaltung weist das Drehwinkelerfassungssystem ferner zumindest einen Elektronik-Sicherheitspfad zur Übertragung von Ansteuerungssignalen und/oder Sensorsignalen, wobei der zumindest eine Elektronik-Sicherheitspfad operativ mit der zumindest einen Sensoreinheit verbindbar ist, auf, wobei der zumindest eine Elektronik-Sicherheitspfad zumindest einen Signalübertrager aufweist, der den Elektronik-Sicherheitspfad in einen vom Signalübertrager aus der Sensoreinheit zugewandten Elektronik-Sicherheitspfadabschnitt und einen vom Signalübertrager aus der Sensoreinheit abgewandten Elektronik-Sicherheitspfadabschnitt unterteilt, und wobei der zumindest eine Signalübertrager dazu konfiguriert ist, die zumindest eine Sensoreinheit galvanisch von dem der Sensoreinheit abgewandten Elektronik-Sicherheitspfadabschnitt zu trennen.

Der Elektronik-Hauptpfad und der Elektronik-Sicherheitspfad sind voneinander getrennte Einzelpfade, die parallel zueinander geschaltet sind oder auch grundsätzlich getrennt verlaufen. Der Elektronik-Hauptpfad kann dabei als der Elektronikpfad verstanden werden, der im störungsfreien Betrieb mit der Sensoreinheit operativ verbunden ist, um hierüber Sensorsignale oder auch weitere andere Signale, wie Ansteuerungssignale oder dergleichen, unidirektional oder bidirektional leiten zu können. Entsprechend kann der Elektronik-Sicherheitspfad nur dann mit der Sensoreinheit operativ verbunden sein bzw. werden, wenn eine Störung eine Übertragung über den Elektronik-Hauptpfad unterbindet oder anderweitig stört. Alternativ können der Elektronik-Hauptpfad und der Elektronik-Sicherheitspfad zumindest zeitweise gleichzeitig operativ mit der Sensoreinheit verbunden sein, so dass eine Plausibilitätsprüfung der übertragenen Signale ermöglicht wird oder aber auch bei Ausfall des Elektronik-Hauptpfads die Signale ohne Verzögerung über den Elektronik-Sicherheitspfad übertragbar sind. Die operative Verbindbarkeit des Elektronik-Sicherheitspfads betrifft vergleichbar zum Elektronik-Hauptpfad sowohl eine direkte als auch indirekte Verbindung der Einzelpfade zur Signalübertragung. Zudem kann sich die operative Verbindung auch auf eine tatsächliche Aktivierung der Einzelpfade bzw. der jeweiligen Signalaufbereitungseinheit beziehen.

Die Konfiguration des Drehwinkelerfassungssystems mit einem Elektronik-Hauptpfad und einem Elektronik-Sicherheitspfad kann sich auf eine diesbezüglich redundante Auslegung des Drehwinkelerfassungssystems beziehen. Der Grundgedanke basiert dabei darauf, dass anstatt zwei oder mehr vollständigen Sensorpfaden, die sowohl die Sensoreinheit an sich als auch beispielweise eine Signalaufbereitungseinheit, wie eine entsprechende Signalverarbeitungselektronik, aufweisen, eine Sensoreinheit mit zwei oder mehr Signalaufbereitungseinheiten verwendet wird, um eine Redundanz zu erreichen, wobei jeweils zumindest eine der Signalaufbereitungseinheiten einem Elektronik-Hauptpfad und jeweils zumindest eine der Signalaufbereitungseinheiten einem Elektronik-Sicherheitspfad zugeordnet ist.

Durch die Ausgestaltung des Drehwinkelerfassungssystems mit einer Sensoreinheit mit redundanten Einzelpfaden kann eine Reduzierung des erforderlichen Bauraums insbesondere dadurch unterstützt werden, dass die jeweiligen Signalaufbereitungseinheiten durch kleine mikroelektronische und/oder hochintegrierte Bauteile realisiert werden können, die selbst bei redundanter Ausführung der Einzelpfade einen vergleichsweise geringen Platzbedarf aufweisen. Die redundante Ausführung der Einzelpfade, also des Elektronik-Sicherheitspfads im Hinblick auf den Elektronik-Hauptpfad bzw. jeweiliger Signalaufbereitungseinheiten, kann sich auf eine identische Funktionsausführung oder aber auch auf eine Redundanz vorbestimmter, insbesondere sicherheitsrelevanter Funktionen beziehen.

Der Elektronik-Sicherheitspfad kann aber auch als eigenständiger Elektronik-Funktionspfad ausgebildet sein, der unabhängig von oder ergänzend zu einer Redundanzfunktion weitere Funktionen ausführt und/oder eine anderweitige Signalübertragung vorsieht. Bei einer solchen Konfiguration stellt der Elektronik-Sicherheitspfad streng genommen keinen alleinigen Sicherheitspfad, sondern vielmehr einen zweiten Elektronik-Funktionspfad dar.

Die Konfiguration mit zumindest einem Elektronik-Hauptpfad und zumindest einem Elektronik-Sicherheitspfad stellt an sich auch ein von der Erhöhung der HC/ISO-Festigkeit unabhängig verwendbares Konfigurationsprinzip eines Drehwinkelerfassungssystems dar, das zwar Synergien aufweist, aber auch unabhängig genutzt werden kann.

In unabhängiger Betrachtung ergibt sich somit gemäß Offenbarung ein Drehwinkelerfassungssystem für eine Drehwinkelerfassung eines rotatorischen Bremsantriebs für ein Schienenfahrzeug, zumindest eine Sensoreinheit zur Erfassung eines Drehwinkels, die operativ mit dem rotatorischen Bremsantrieb verbindbar ist, sowie zumindest einen Elektronik-Hauptpfad und zumindest einen Elektronik-Sicherheitspfad pro Sensoreinheit aufweisend, wobei der zumindest eine Elektronik-Hauptpfad und der zumindest eine Elektronik-Sicherheitspfad jeweils als Einzelpfad operativ mit der zumindest einen Sensoreinheit verbindbar sind, auf, wobei der zumindest eine Elektronik-Hauptpfad und der zumindest eine Elektronik-Sicherheitspfad jeweils zumindest eine Signalaufbereitungseinheit aufweisen.

Gemäß einer Ausgestaltung der Offenbarung des redundanten Drehwinkelerfassungssystems ist die Sensoreinheit mit einer höheren Ausfallsicherheit ausgestattet als der zumindest eine Elektronik Hauptpfad und/oder der zumindest eine Elektronik-Sicherheitspfad. Insbesondere weist die Sensoreinheit in Bezug auf die höhere Ausfallsicherheit unverlierbare Eigenschaften auf.

Demnach wird die Sensoreinheit, wie beispielsweise ein einzelnes Sensorelement, entsprechend einfach, zuverlässig und ausfallsicher ausgeführt, um eine möglichst hohe Ausfallsicherheit zu erreichen. Dies kann zum Beispiel durch geeignete Maßnahmen, wie eine dauerfeste mechanische Auslegung, eine verstärkte Isolation, größere Leitungsquerschnitte und/oder die Verwendung alterungsresistenter Materialien, erfolgen. Insbesondere wird die Sensoreinheit so ausgeführt, dass ihre Eigenschaften über einen definierten Einsatzzeitraum oder auch über ihre gesamte Lebensdauer "unverlierbar" sind. Der Begriff der "unverlierbaren Eigenschaften" bezieht sich in diesem Zusammenhang auf einen nicht anzunehmenden Ausfall. Da die Signalaufbereitungseinheiten bzw. damit in Verbindung stehenden Einzelpfade zumindest in vordefinierten Funktionalitäten redundant ausgeführt sind, können Funktionalitäten mit geringerer Ausfallsicherheit auf diese Einzelpfade verlegt werden. Gerade im Hinblick auf eine Signalaufbereitungseinheit mit entsprechenden Komponenten in meist vergleichsweise höherer Komplexität, die eine höhere Ausfallwahrscheinlichkeit aufweisen, kann die höhere Ausfallwahrscheinlichkeit durch die Redundanz zumindest teilweise kompensiert werden.

Gemäß einer Ausgestaltung der Offenbarung des redundanten Drehwinkelerfassungssystems weist die Signalaufbereitungseinheit des zumindest einen Elektronik Hauptpfads und/oder des zumindest einen Elektronik-Sicherheitspfads zumindest einen Signalwandler auf.

Über den zumindest einen Signalwandler können beispielsweise von der Sensoreinheit übermittelte Sensorsignale in durch weitere Signalaufbereitungskomponenten verarbeitbare Signale umgewandelt werden. Der Signalwandler kann zum Beispiel ein A/D-Wandler sein, der ein analoges Signal der Sensoreinheit in ein digitales Format umwandelt.

Gemäß einer Ausgestaltung der Offenbarung des redundanten Drehwinkelerfassungssystems weist die Signalaufbereitungseinheit des zumindest einen Elektronik Hauptpfads und/oder des zumindest einen Elektronik-Sicherheitspfads zumindest eine Signalverarbeitungseinheit auf.

Beispielsweise wird durch die Signalverarbeitungseinheit das optional zuvor über den Signalwandler konvertierte Signal der Sensoreinheit weiter verarbeitet. Die weitere Verarbeitung kann unter anderem eine Berechnung in eine andere Größe unter Berücksichtigung weiterer Signaleingänge sein und/oder eine andere Form der Signalverarbeitung, um auf Basis des Signals der Sensoreinheit einen Drehwinkel des rotatorischen Bremsantriebs zu bestimmen.

Gemäß einer Ausgestaltung der Offenbarung des redundanten Drehwinkelerfassungssystems weist die Signalaufbereitungseinheit des zumindest einen Elektronik Hauptpfads und/oder des zumindest einen Elektronik-Sicherheitspfads zumindest eine Signalausgabeeinheit auf.

Die Signalausgabeeinheit gibt den basierend auf dem Signal der Sensoreinheit ermittelten Drehwinkel des rotatorischen Bremsantriebs aus. Die Signalausgabeeinheit kann eine separate Einheit der Signalausbereitungseinheit sein oder aber auch in der vorstehenden Signalverarbeitungseinheit integriert sein. Umgekehrt kann die Signalausgabeeinheit auch Signalverarbeitungsfunktionen umfassen.

Gemäß einer Ausgestaltung der Offenbarung des redundanten Drehwinkelerfassungssystems weisen oder weist der zumindest eine Elektronik Hauptpfad und/oder der zumindest eine Elektronik-Sicherheitspfad zumindest einen Signalschalter auf, über den die zumindest eine Signalaufbereitungseinheit operativ mit der zumindest einen Sensoreinheit verbindbar ist.

Über einen solchen Signalschalter können oder kann der zumindest eine Elektronik Hauptpfad und/oder der zumindest eine Elektronik-Sicherheitspfad somit wahlweise mit der Sensoreinheit verbunden und wieder getrennt werden. Sofern ein Fehler in dem zumindest einen Elektronik Hauptpfad und/oder dem zumindest einen Elektronik-Sicherheitspfad auf die Sensoreinheit übertragbar wäre bzw. sich anderweitig negativ auf die Sensoreinheit auswirken könnte, wird dies durch eine Trennung des fehlerbehafteten Einzelpfads unterbunden. Zudem kann über den Signalschalter auch die gezielte Verbindung mit der Sensoreinheit erfolgen. So kann beispielsweise zunächst nur ein Einzelpfad mit der Sensoreinheit verbunden werden, wobei dann bei entsprechendem Ausfall dieses Einzelpfads oder aus anderen Gründen der andere Einzelpfad über den Signalschalter zugeschaltet oder auf diesen umgeschaltet wird. Der Begriff des Zuschaltens bezieht sich auf die Verbindung beider Einzelpfade, während bei einem Umschalten der vorherige Einzelpfad getrennt wird.

Gemäß einer Ausgestaltung der Offenbarung des redundanten Drehwinkelerfassungssystems weisen oder weist der zumindest eine Elektronik Hauptpfad und/oder der zumindest eine Elektronik-Sicherheitspfad zumindest eine Energieversorgungseinheit auf, die operativ mit der zumindest einen Sensoreinheit verbindbar ist.

Die Sensoreinheit benötigt somit nicht zwangsweise eine eigene Energieversorgung, sondern kann über den zumindest einen Elektronik Hauptpfad und/oder den zumindest einen Elektronik-Sicherheitspfad mit Energie versorgt werden. Wenn sowohl der zumindest eine Elektronik Hauptpfad und/oder der zumindest eine Elektronik-Sicherheitspfad zumindest eine Energieversorgungseinheit oder eine entsprechende Anbindung an eine Energieversorgungseinheit aufweisen, so kann die Ausfallsicherheit weiter erhöht werden.

Gemäß einer Ausgestaltung der Offenbarung des redundanten Drehwinkelerfassungssystems weisen oder weist der zumindest eine Elektronik Hauptpfad und/oder der zumindest eine Elektronik-Sicherheitspfad zumindest einen Energieversorgungsschalter auf, über den die zumindest eine Energieversorgungseinheit operativ mit der zumindest einen Sensoreinheit verbindbar ist.

Vergleichbar zum Signalschalter kann somit auch hier eine gezielte Verbindung und Trennung der jeweiligen Energieversorgungseinheit erfolgen.

Die verschiedenen Ausgestaltungen der Offenbarung des redundanten Drehwinkelerfassungssystems sind für sich genommen oder auch in Kombination auf das Drehwinkelerfassungssystem der vorliegenden Erfindung in Bezug auf eine Konfiguration mit einem Elektronik-Sicherheitspfad anwendbar.

Gemäß einer Ausgestaltung ist die zumindest eine Sensoreinheit in einem Sensoreinheitsgehäuse angeordnet, und der zumindest eine Signalübertrager des Elektronik-Hauptpfads und/oder des Elektronik-Sicherheitspfads bildet den Signaleingang und/oder Signalausgang des Elektronik-Hauptpfads und/oder des Elektronik-Sicherheitspfads in und/oder aus dem Sensoreinheitsgehäuse aus.

Der zumindest eine Signalübertrager bildet somit eine Schnittstelle für die Sensoreinheit aus, so dass der Signalübertrager auch in einfacher Weise nachrüstbar sein kann. Insbesondere kann der Signalübertrager als eine Schnittstelle des Sensoreinheitsgehäuses, also in oder an dem Sensoreinheitsgehäuse, angeordnet sein.

Gemäß einer Ausgestaltung ist der zumindest eine Signalübertrager des Elektronik-Hauptpfads und/oder des Elektronik-Sicherheitspfads ein Signaltransformator, ein Digitalisolator oder ein Optokoppler oder weist zumindest einen Signaltransformator, einen Digitalisolator und/oder einen Optokoppler auf.

Eine galvanische Trennung kann beispielsweise durch vergleichsweise kleine Übertrager bzw. Transformatoren als Signalübertrager erfolgen, die vor den Eingängen und Ausgängen des Sensors und auf Leiterplatten angeordnet werden können. Hierdurch wird eine vergleichsweise kostengünstige Technik verwendet, die sich auf die analogen Schnittstellen zur Sensoreinheit bezieht. Allerdings ist bei dieser Variante der auf der Leiterplatine und in der Bauhöhe erforderliche Platzbedarf zu berücksichtigen, da der Übertrager bzw. Transformator mit zunehmender Eingangsspannung entsprechend größer ausgelegt werden muss. Hierzu können, wie auch für die folgende digitale Signalübertragung, Optokoppler eingesetzt werden.

Alternativ oder ergänzend kann die galvanische Trennung auch über digitale Schnittstellen erfolgen. Da heutige Sensoren häufig eine weitere digitale Signalverarbeitung erfordern und die benötigten Messgrößen über digitale Schnittstellen an das System übermitteln, können an dieser Systemgrenze Digitalisolatoren eingesetzt werden. Diese Digitalisolatoren können als einzelne elektronische Bauteile in Form einer integrierten Schaltung ausgebildet sein und ermöglichen die gesicherte Isolation der Signalleitungen und Versorgungsleitungen sowie von Kommunikations- und Datenschnittstellen, um die höheren HV/ISO-Festigkeitsanforderungen zu erfüllen. Wie vorstehend bereits angeführt, kann aber auch ein Optokoppler bei entsprechender Konfiguration als digitaler Isolator eingesetzt werden.

Gemäß einer Ausgestaltung ist die zumindest eine Sensoreinheit ein Resolver oder weist zumindest einen Resolver auf.

Ein Resolver ist ein Drehwinkelsensor, wobei dieser, ähnlich wie ein Elektromotor, einen Rotor und einen Stator aufweist. Der Rotor des Resolvers kann aus einem magnetisch gut leitfähigen Material ausgebildet sein und den magnetischen Rückschluss für das vom Stator erzeugte magnetische Feld bilden. Betrachtet man die Wicklung im Stator des Resolvers, so können zwei unterschiedliche Bereiche unterschieden werden. Der erste Bereich entspricht einem Drehtransformator, wobei die Wicklung hier konzentrisch um den Rotor angeordnet ist. Im zweiten Bereich entspricht der Wicklungsaufbau dem Aufbau einer Motorwicklung mit zwei Phasen, die jedoch miteinander nicht verbunden sind. Die beiden Wicklungsbereiche sind räumlich voneinander getrennt und magnetisch nur durch den Rotor und den Statorrückschluss gekoppelt. Beispielsweise wird die Erregerwicklung des Resolvers mit einer Sinus- oder rechteckförmigen, hochfrequenten Spannung angeregt, typischerweise im Bereich von 2 kHz bis 10 kHz. Das magnetische Wechselfeld wird dabei durch den Rotor ausschließlich auf die Messwicklungen übertragen und in seiner Amplitude moduliert. Als Auswertegrößen können die Spannungen in den Messwicklungen herangezogen werden. Als Ausgangssignale werden dann eine Sinusschwingung und eine Cosinusschwingung angegeben. Da die magnetische Erregung des Rotors mit einer Wechselspannung konstanter Amplitude erfolgt, induziert sie in den Messwicklungen eine Spannung, deren Amplitude unabhängig von der Drehzahl der Welle des Bremsantriebs ist. Die Amplituden der Spannungen in den Messwicklungen hängen somit nur von dem Rotorwinkel ab.

Aufgrund des Aufbaus des Resolvers, bei dem keine mechanischen Komponenten mit Verschleißverhalten, wie zum Beispiel Kugellager, sowie keine elektronischen Bestandteile, wie beispielsweise Mikroprozessoren, Halbleiter oder Kondensatoren mit Festelektrolyt, zum Einsatz kommen, bietet der Resolver selbst eine sehr hohe Ausfallsicherheit.

Insbesondere weist der Elektronik-Hauptpfad und/oder der Elektronik-Sicherheitspfad zumindest einen Resolver-Digital-Wandler auf, der insbesondere dazu ausgebildet ist, einen Rotor des Resolvers magnetisch, bevorzugt mit einer Wechselspannung mit konstanter Amplitude, anzuregen und Sinus- und Cosinussignale eines Stators des Resolvers zu empfangen.

Durch die Verwendung zumindest eines Resolver-Digital-Wandlers kann der Resolver als Sensoreinheit in einfacher Weise betrieben werden. Der Resolver-Digital-Wandler kann dabei sowohl für die Ansteuerung als auch für die Messdatenauswertung des Resolvers eingesetzt werden. Über eine digitale Schnittstelle des Resolver-Digital-Wandlers, wie eine SPI-Schnittstelle, können Informationen über die gemessenen Größen von dem Resolver-Digital-Wandler an ein übergeordnetes System, wie beispielsweise einen Mikrocontroller oder ein FPGA (Field Programmable Gate Array), übertragen werden.

Insbesondere ist bzw. sind zwischen dem Resolver-Digital-Wandler im Elektronik-Hauptpfad und/oder im Elektronik-Sicherheitspfad und dem Resolver zumindest ein Erregungssignalschalter zur Trennung und Verbindung des Resolver-Digital-Wandlers und des Resolvers in Bezug auf einen Erregungssignalpfad im Elektronik-Hauptpfad und/oder Elektronik-Sicherheitspfad angeordnet, zumindest ein Sinussignalschalter zur Trennung und Verbindung des Resolver-Digital-Wandlers und des Resolvers in Bezug auf einen Sinussignalpfad im Elektronik-Hauptpfad und/oder Elektronik-Sicherheitspfad angeordnet und/oder zumindest ein Cosinussignalschalter zur Trennung und Verbindung des Resolver-Digital-Wandlers und des Resolvers in Bezug auf einen Cosinussignalpfad im Elektronik-Hauptpfad und/oder Elektronik-Sicherheitspfad angeordnet.

Die Übertragung der Erregungssignale, Sinussignale und/oder Cosinussignale ist somit über den jeweiligen Erregungssignalschalter, Sinussignalschalter bzw. Cosinussignalschalter zwischen dem Resolver-Digital-Wandler im Elektronik-Hauptpfad und/oder im Elektronik-Sicherheitspfad und dem Resolver schaltbar. Die jeweilige Trennung und Verbindung kann sich auf einen Fehlerfall, der ein Umschalten von einem Elektronik-Hauptpfad auf einen Elektronik-Sicherheitspfad auslöst, beziehen. Alternativ oder ergänzend kann eine Trennung und Verbindung aber auch bei einer detektierten Spannungsüberhöhung vorgesehen werden, so dass ein Überspannungsschutz realisiert wird.

Gemäß einer Weiterbildung ist bzw. sind der zumindest eine Resolver-Digital-Wandler und/oder eine Signalverarbeitungseinheit dazu ausgebildet, aus den Sinus- und Cosinussignalen des Stators des Resolvers, insbesondere unter Berücksichtigung einer Polpaarzahl des Resolvers, eine Drehwinkelposition des Resolvers zu bestimmen.

Die Auswertung der Resolversignale, also der Sinus- und Cosinussignale, erfolgt beispielweise über die Bildung des Arcustangens, wodurch die elektrische Drehwinkelposition ausgegeben werden kann. Durch Einbeziehung der Polpaarzahl des Resolvers ist auch die Ausgabe als mechanische Drehwinkelposition möglich. Weiterhin ist eine Diagnose des Resolvers durch die beiden Ausgangssignale und die Anwendung von trigonometrischen Berechnungen möglich.

Gemäß einer Ausgestaltung ist der zumindest eine Resolver-Digital-Wandler im Elektronik-Hauptpfad und/oder im Elektronik-Sicherheitspfad in dem der Sensoreinheit zugewandten Elektronik-Hauptpfadabschnitt bzw. Elektronik-Sicherheitspfadabschnitt angeordnet.

Der zumindest eine Resolver-Digital-Wandler im Elektronik-Hauptpfad und/oder im Elektronik-Sicherheitspfad kann somit durch den Signalübertrager zur galvanischen Trennung gleichermaßen geschützt bzw. von dem der Sensoreinheit abgewandten Elektronik-Hauptpfadabschnitt bzw. Elektronik-Sicherheitspfadabschnitt galvanisch getrennt werden.

Gemäß einer Ausgestaltung weist das Drehwinkelerfassungssystem zumindest eine Sensoreinheit und als weitere Sensoreinheit eine Sicherheitspfadsensoreinheit auf, wobei der zumindest eine Elektronik-Sicherheitspfad operativ mit der Sicherheitssensoreinheit verbindbar ist.

Beispielweise in Bezug auf eine Redundanz oder auch zur Detektierung unterschiedlicher Sensorsignale können somit nicht nur die zumindest eine Sensoreinheit mit dem Elektronik-Hauptpfad und dem elektronik-Sicherheitspfad als Einzelpfade verbunden sein, sondern der Elektronik-Sicherheitspfad kann alternativ oder ergänzend mit einer von der zumindest einen Sensoreinheit verschiedenen weiteren Sensoreinheit operativ verbindbar sein.

Insbesondere weisen die Sensoreinheit und die Sicherheitspfadsensoreinheit ein voneinander unterschiedliches Messprinzip oder eine voneinander unterschiedliche Messkonfiguration auf.

Das unterschiedliche Messprinzip oder die unterschiedliche Messkonfiguration kann sich dabei auf die Bestimmung derselben Messgröße, also den Drehwinkel beziehen. Alternativ oder ergänzend kann hierüber aber auch die Bestimmung einer weiteren Messgröße vorgesehen werden, die eine Bestimmung des Drehwinkels unterstützt oder den Drehwinkel ergänzend näher spezifiziert oder aber auch hiervon unabhängig sein kann. Hinsichtlich unterschiedlicher Messprinzipien zur Bestimmung einer Messgröße, hier des Drehwinkels, kann die Sensoreinheit der vorstehend beschriebene Resolver sein, während die weitere Sensoreinheit ein Hall-Sensor ist. Als Beispiel einer unterschiedlichen Messkonfiguration können die Sensoreinheit und die weitere Sensoreinheit beispielsweise auch beide als Resolver ausgebildet sein, aber je nach Betriebsmodus des rotatorischen Bremsantriebs mit verschiedenen Erregersignalen angesteuert werden.

Gemäß einer Ausgestaltung weist das Drehwinkelerfassungssystem zumindest eine Signalverarbeitungseinheit in dem Elektronik-Hauptpfad in dem der Sensoreinheit abgewandten Elektronik-Hauptpfadabschnitt und zumindest eine Signalverarbeitungseinheit in dem Elektronik-Sicherheitspfad in dem der Sensoreinheit abgewandten Elektronik-Sicherheitspfadabschnitt auf.

Die zumindest eine Signalverarbeitungseinheit in dem Elektronik-Hauptpfad und dem Elektronik-Sicherheitspfad ist somit über den Signalübertrager von der zumindest einen Sensoreinheit galvanisch getrennt. Die Möglichkeit einer entsprechenden Signalverarbeitung über den Elektronik-Hauptpfad und den Elektronik-Sicherheitspfad erlaubt zudem die bereits angesprochene redundante Signalverarbeitung.

Gemäß einer Ausgestaltung weist das Drehwinkelerfassungssystem zumindest eine Signalverarbeitungseinheit und zumindest eine weitere Signalverarbeitungseinheit in dem Elektronik-Hauptpfad in dem der Sensoreinheit abgewandten Elektronik-Hauptpfadabschnitt auf, wobei die zumindest eine Signalverarbeitungseinheit und die zumindest eine weitere Signalverarbeitungseinheit parallel geschaltet sind.

Auch hier sind die zumindest eine Signalverarbeitungseinheit und die zumindest eine weitere Signalverarbeitungseinheit durch den Signalübertrager galvanisch von der zumindest einen Sensoreinheit getrennt. Beiden Signalverarbeitungseinheiten kann dabei über den Elektronik-Hauptpfad dasselbe Sensorsignal übermittelt werden. Über die Parallelschaltung kann die Signalverarbeitung des Sensorsignals wiederum redundant erfolgen.

Gemäß einem weiteren Aspekt betrifft die vorliegende Erfindung ein Bremssystem für ein Schienenfahrzeug, das zumindest einen Bremsaktuator zur Aufbringung einer Bremskraft, zumindest einen rotatorischen Bremsantrieb zur Betätigung des Bremsaktuators sowie zumindest ein vorstehend beschriebenes Drehwinkelerfassungssystem aufweist.

Die bei vorstehender und nachfolgender Beschreibung des Drehwinkelerfassungssystems beschriebenen Merkmale betreffen gleichermaßen vorteilhafte Weiterbildungen des erfindungsgemäßen Bremssystems und umgekehrt.

Gemäß einem weiteren Aspekt betrifft die vorliegende Erfindung ein Schienenfahrzeug mit zumindest einem vorstehend beschriebenen Drehwinkelerfassungssystem und/oder einem vorstehend beschriebenen Bremssystem, wobei zumindest die Sensoreinheit in einem Drehgestell des Schienenfahrzeugs angeordnet ist.

Die bei vorstehender und nachfolgender Beschreibung des Drehwinkelerfassungssystems beschriebenen Merkmale betreffen gleichermaßen vorteilhafte Weiterbildungen des erfindungsgemäßen Schienenfahrzeugs und umgekehrt.

Die vorstehend und nachfolgend beschriebenen Ausführungsformen der Erfindung sind nicht begrenzend auf den Gegenstand der Erfindung anzusehen. Vielmehr können weitere erfindungsgemäße Gegenstände durch Ergänzen, Weglassen oder Vertauschen einzelner Merkmale erhalten werden.

Nachfolgend werden bevorzugte Ausführungsformen der Erfindung unter Zuhilfenahme der beigefügten Zeichnungen beschrieben.

Im Einzelnen zeigen
Fig. 1 eine schematische Darstellung eines Drehwinkelerfassungssystems für ein Schienenfahrzeug gemäß einer beispielhaften ersten Ausführungsform;
Fig. 2 eine schematische Darstellung eines Drehwinkelerfassungssystems für ein Schienenfahrzeug gemäß einer beispielhaften zweiten Ausführungsform;
Fig. 3 eine schematische Darstellung eines Drehwinkelerfassungssystems für ein Schienenfahrzeug gemäß einer beispielhaften dritten Ausführungsform; und
Fig. 4 eine schematische Darstellung eines Drehwinkelerfassungssystems für ein Schienenfahrzeug gemäß einer beispielhaften vierten Ausführungsform.

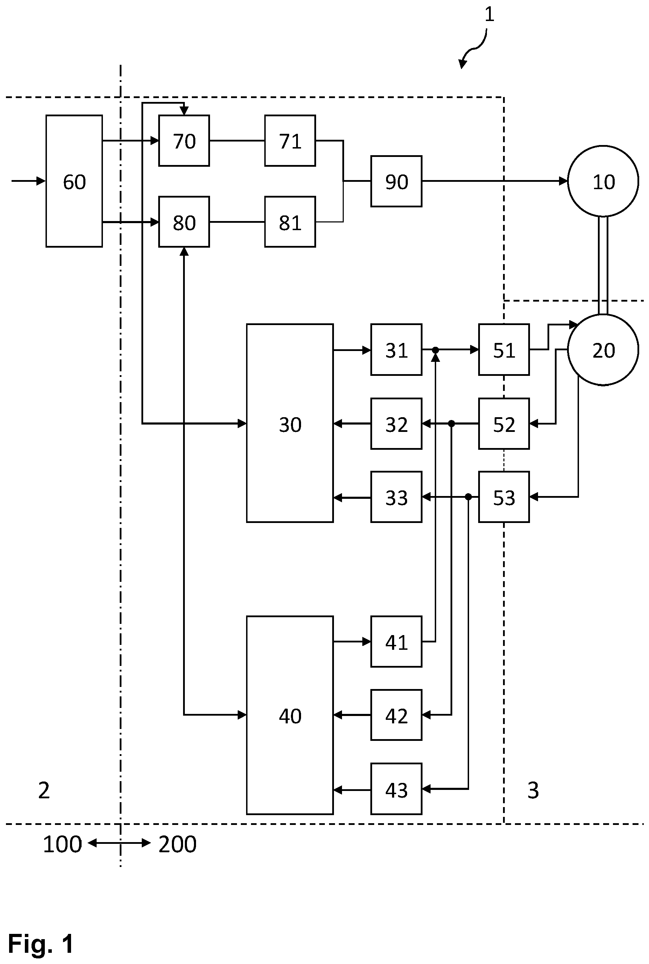

**Fig. 1** zeigt eine schematische Darstellung eines Drehwinkelerfassungssystems 1 für ein Schienenfahrzeug gemäß einer beispielhaften ersten Ausführungsform. Das Drehwinkelerfassungssystem 1 weist einen Resolver 20 als exemplarische Sensoreinheit auf, der zu einem Drehwinkel eines Motors 10 als exemplarischen rotatorischen Bremsantrieb korrespondierende Sensorsignale an einen später noch beschriebenen Elektronik-Hauptpfad und einen ebenfalls später noch beschriebenen Elektronik-Sicherheitspfad übertragen kann. Der Motor 10 wird über eine Motorantriebsteuerung 90, die Signale einer Spannungsversorgung 60 unter weiterer Berücksichtigung einer auf den Elektronik-Hauptpfad bezogenen Signalverarbeitungseinheit 70 als auch einer auf den Elektronik-Sicherheitspfad bezogenen Signalverarbeitungseinheit 80 an den Motor 10 übermittelt, angesteuert. Wie hier gezeigt, ist die Spannungsversorgung in einem Zug 100 als übergeordnete Systemeinheit eines Schienenfahrzeugs angeordnet, während die übrigen dargestellten Komponenten einem Bremsaktuator 200 zuordenbar sind, der in der gezeigten Ausführungsform in einem Drehgestell vorgesehen ist. Die jeweiligen Verbindungen zwischen der Signalverarbeitungseinheit 70 und der Signalverarbeitungseinheit 80 mit der Motorantriebssteuerung 90 können über jeweilige Signalausgangsschalter 71, 81 unterbrochen und wieder hergestellt werden.

Der Elektronik-Hauptpfad verbindet den Resolver 20 mit der dem Elektronik-Hauptpfad zuordenbaren Signalverarbeitungseinheit 70. Zur Ansteuerung des Resolvers 20 wird von der Signalverarbeitungseinheit 70 über den Elektronik-Hauptpfad ein Resolver-Digital-Wandler 30 angesteuert, der wiederum über den Elektronik-Hauptpfad gemäß Ansteuerung ein Erregungssignal an den Resolver 20 übermittelt. Die Verbindung zwischen dem Resolver-Digital-Wandler 30 und dem Resolver 20 kann über einen Erregungssignalschalter 31 im Elektronik-Hauptpfad getrennt und wieder verbunden werden. In Reaktion auf das Erregungssignal in Verbindung mit dem Drehwinkel des Motors 10 übermittelt der Resolver 20 Sinussignale und Cosinussignale über jeweilige getrennte Signalpfade im Elektronik-Hauptpfad an den Resolver-Digital-Wandler 30, der hierzu korrespondierende Signale an die Signalverarbeitungseinheit 70 überträgt. Die jeweiligen Signalverbindungen zwischen dem Resolver-Digital-Wandler 30 und dem Resolver 20 können über einen Sinussignalschalter 32 und einen Cosinussignalschalter 33 im Elektronik-Hauptpfad gleichermaßen getrennt und wieder verbunden werden.

Analog zum Elektronik-Hauptpfad ist der Elektronik-Sicherheitspfad konfiguriert, der hier exemplarisch die Funktion eines zum Elektronik-Hauptpfad redundanten Elektronik-Sicherheitspfads übernimmt. Entsprechend verbindet der Elektronik-Sicherheitspfad den Resolver 20 mit der dem Elektronik-Sicherheitspfad zuordenbaren Signalverarbeitungseinheit 80. Zur Ansteuerung des Resolvers 20 wird von der Signalverarbeitungseinheit 80 über den Elektronik-Sicherheitspfad ein Resolver-Digital-Wandler 40 angesteuert, der wiederum über den Elektronik- Sicherheitspfad gemäß Ansteuerung ein Erregungssignal an den Resolver 20 übermittelt. Die Verbindung zwischen dem Resolver-Digital-Wandler 40 und dem Resolver 20 kann über einen Erregungssignalschalter 41 im Elektronik-Hauptpfad getrennt und wieder verbunden werden. In Reaktion auf das Erregungssignal in Verbindung mit dem Drehwinkel des Motors 10 übermittelt der Resolver 20 Sinussignale und Cosinussignale über jeweilige getrennte Signalpfade im Elektronik- Sicherheitspfad an den Resolver-Digital-Wandler 40, der hierzu korrespondierende Signale an die Signalverarbeitungseinheit 80 überträgt. Die jeweiligen Signalverbindungen zwischen dem Resolver-Digital-Wandler 40 und dem Resolver 20 können über einen Sinussignalschalter 42 und einen Cosinussignalschalter 43 im Elektronik-Sicherheitspfad gleichermaßen getrennt und wieder verbunden werden.

Zur galvanischen Trennung des Resolvers 20 von den übrigen vorstehend genannten Komponenten im Elektronik-Hauptpfad und im Elektronik-Sicherheitspfad ist jeweils im Signalpfad für das Erregungssignal zwischen dem Erregungssignalschalter 31 bzw. 41 und dem Resolver 20 ein Erregungssignaltransformator 51, im Signalpfad für das Sinussignal zwischen dem Sinussignalschalter 32 bzw. 42 und dem Resolver 20 ein Sinussignaltransformator 52 und im Signalpfad für das Cosinussignal zwischen dem Cosinussignalschalter 33 bzw. 43 und dem Resolver 20 ein Cosinussignaltransformator 53 angeordnet. Die jeweiligen Transformatoren 51, 52, 53 trennen den entsprechenden Signalpfad in einem dem Resolver 20 zugewandten entsprechenden Signalpfadabschnitt und einem dem Resolver 20 abgewandten entsprechenden Signalpfadabschnitt. Der Resolver 20 ist hier in einem Sensoreinheitsgehäuse 3 angeordnet. Die jeweiligen Signaltransformatoren 51, 52, 53 zur galvanischen Trennung sind in der gezeigten Ausführungsform als Gehäuseschnittstellen des Sensoreinheitsgehäuses 3 ausgebildet bzw. entsprechend in einen Schnittstellenbereich des Sensoreinheitsgehäuses 3 integriert. Demnach ist der dem Resolver 20 zugewandte Signalpfadabschnitt in dem Sensoreinheitsgehäuse 3 angeordnet, während der dem Resolver 20 abgewandte Signalpfadabschnitt einem Bereich eines Batteriepotentials 2 zuzuordnen ist.

Durch die vorstehend beschriebene Konstellation mit den an den Signalzuleitungen zu dem Resolver 20 zwischengeschalteten Signaltransformatoren 51, 52, 53 kann weiterhin ein Standard-Resolver mit metallischem Gehäuse verwendet werden, das Vorteile in Bezug auf Kosten, Haltbarkeit und Verfügbarkeit bieten kann. Die Signaltransformatoren 51, 52, 53 können zudem vergleichsweise kostengünstig verfügbar sein und können nur geringfügig höhere Ausfallraten, beispielsweise +30 FIT ("Failure in Time") aufweisen. Zur Reduzierung des Platzbedarfs der Signaltransformatoren 51, 52, 53 können bzw. kann bei entsprechender Notwendigkeit aufgrund des maximal zur Verfügung stehenden Bauraums zum Beispiel eine Auflösung und/oder die Herabsetzung der Versorgungsspannung für den Resolver 20, beispielsweise von 7 Veff auf 1 Veff, in Betracht gezogen werden.

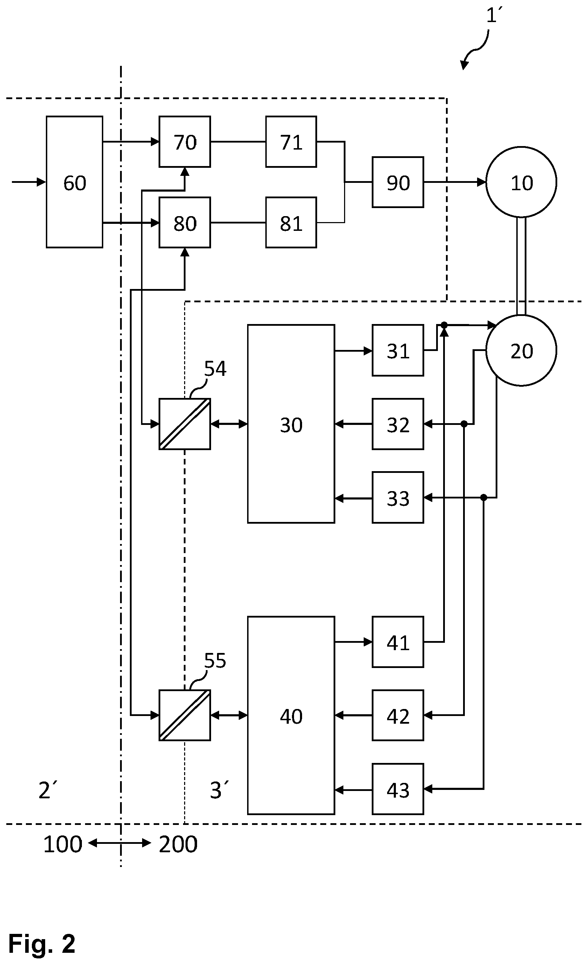

**Fig. 2** zeigt eine schematische Darstellung eines Drehwinkelerfassungssystems 1' für ein Schienenfahrzeug gemäß einer beispielhaften zweiten Ausführungsform. Das Drehwinkelerfassungssystem 1' der zweiten Ausführungsform unterscheidet sich von dem Drehwinkelerfassungssystem 1 der ersten Ausführungsform dadurch, dass das Drehwinkelerfassungssystem 1' eine galvanische Trennung zwischen der Signalverarbeitungseinheit 70 und dem Resolver-Digital-Wandler 30 im Elektronik-Hauptpfad und eine galvanische Trennung zwischen der Signalverarbeitungseinheit 80 und dem Resolver-Digital-Wandler 40 im Elektronik-Sicherheitspfad anstelle der sich direkt dem Resolver 20 anschließenden galvanischen Trennung durch die Signaltransformatoren 51, 52, 53 vorsieht. Der Resolver 20 sowie der Resolver-Digital-Wandler 30 und der Erregungssignalschalter 31, der Sinussignalschalter 32 und der Cosinussignalschalter 33 des Elektronik-Hauptpfads sind hierzu in einem Sensoreinheitsgehäuse 3' angeordnet. Zur galvanischen Trennung des Resolvers 20 sowie des Resolver-Digital-Wandlers 30 und des Erregungssignalschalters 31, des Sinussignalschalters 32 und des Cosinussignalschalters 33 von der Signalverarbeitungseinheit 70 ist im Elektronik-Hauptpfad ein Digitalisolator 54 vorgesehen, der den Elektronik-Hauptpfad in einen dem Resolver 20 zugewandten Elektronik-Hauptpfadabschnitt und einen dem Resolver 20 abgewandten Elektronik-Hauptpfadabschnitt trennt. Der Digitalisolator 54 ist derart konfiguriert, dass er eine galvanische Trennung zwischen dem dem Resolver 20 zugewandten Elektronik-Hauptpfadabschnitt mit dem Resolver-Digital-Wandler 30 sowie dem Erregungssignalschalter 31, dem Sinussignalschalter 32 und dem Cosinussignalschalter 33 und dem dem Resolver 20 abgewandten Elektronik-Hauptpfadabschnitt mit der Signalverarbeitungseinheit 70 bewirkt. Der Digitalisolator 54 ist in der gezeigten Ausführungsform als Gehäuseschnittstelle des Sensoreinheitsgehäuses 3 ausgebildet bzw. entsprechend in einen Schnittstellenbereich des Sensoreinheitsgehäuses 3 integriert. Demnach ist der dem Resolver 20 zugewandte Elektronik-Hauptpfadabschnitt in dem Sensoreinheitsgehäuse 3' angeordnet, während der dem Resolver 20 abgewandte Elektronik-Hauptpfadabschnitt einem Bereich eines Batteriepotentials 2' zuzuordnen ist.

Zur galvanischen Trennung des Resolvers 20 sowie des Resolver-Digital-Wandlers 40 und des Erregungssignalschalters 41, des Sinussignalschalters 42 und des Cosinussignalschalters 43 von der Signalverarbeitungseinheit 80 ist analog zum Elektronik-Hauptpfad im Elektronik-Sicherheitspfad ein Digitalisolator 55 vorgesehen, der den Elektronik- Sicherheitspfad in einen dem Resolver 20 zugewandten Elektronik-Sicherheitspfadabschnitt und einen dem Resolver 20 abgewandten Elektronik-Sicherheitspfadabschnitt trennt. Der Digitalisolator 55 ist derart konfiguriert, dass er eine galvanische Trennung zwischen dem dem Resolver 20 zugewandten Elektronik-Sicherheitspfadabschnitt mit dem Resolver-Digital-Wandler 40 sowie dem Erregungssignalschalter 41, dem Sinussignalschalter 42 und dem Cosinussignalschalter 43 und dem Resolver 20 abgewandten Elektronik-Sicherheitspfadabschnitt mit der Signalverarbeitungseinheit 80 bewirkt. Der Digitalisolator 55 ist in der gezeigten Ausführungsform als Gehäuseschnittstelle des Sensoreinheitsgehäuses 3 ausgebildet bzw. entsprechend in einen Schnittstellenbereich des Sensoreinheitsgehäuses 3 integriert. Demnach ist der dem Resolver 20 zugewandte Elektronik-Sicherheitspfadabschnitt in dem Sensoreinheitsgehäuse 3' angeordnet, während der dem Resolver 20 abgewandte Elektronik-Sicherheitspfadabschnitt einem Bereich eines Batteriepotentials 2' zuzuordnen ist.

Die Digitalisolatoren 54, 55 sind hier also den jeweiligen Resolver-Digital-Wandlern 30, 40 von den jeweiligen Signalverarbeitungseinheiten 70, 80 in Richtung des Resolvers 20 vorgeschaltet um eine galvanische Trennung der Versorgungsspannung und der digitalen I/O-Schnittstellen zu ermöglichen. Bei einem redundanten Aufbau mit einem Elektronik-Hauptpfad und einem Elektronik-Sicherheitspfad ist somit für jeden Signalpfad ein Digitalisolator 54, 55 vorzusehen.

Im Übrigen sind die Ausführungen zur ersten Ausführungsform entsprechend auf die zweite Ausführungsform übertragbar.

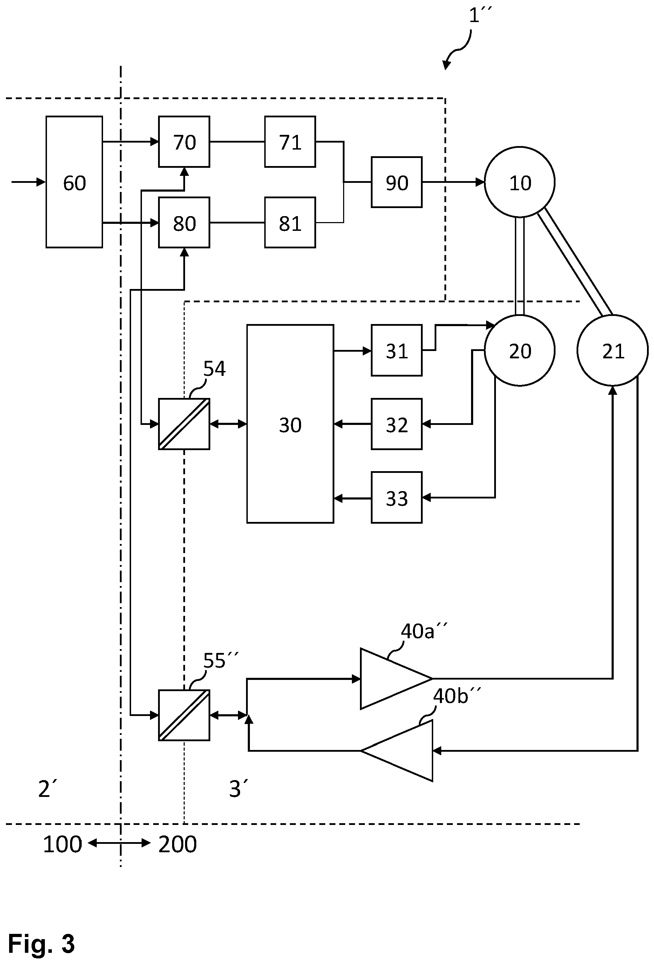

**Fig. 3** zeigt eine schematische Darstellung eines Drehwinkelerfassungssystems 1" für ein Schienenfahrzeug gemäß einer beispielhaften dritten Ausführungsform. Das Drehwinkelerfassungssystem 1" der dritten Ausführungsform unterscheidet sich von dem Drehwinkelerfassungssystem 1' der zweiten Ausführungsform dadurch, dass das Drehwinkelerfassungssystem 1" neben dem Resolver 20 eine Sicherheitspfadsensoreinheit 21 als weitere Sensoreinheit aufweist. Der Elektronik-Hauptpfad des Drehwinkelerfassungssystems 1" unterscheidet sich dabei in seinem Funktionsprinzip und seiner Konfiguration nicht von dem Elektronik-Hauptpfad des Drehwinkelerfassungssystems 1', so dass hierzu auf die vorstehenden Ausführungen zu Fig. 2 verwiesen wird.

Die Unterscheidung der Ausführungsform in Bezug auf die Sicherheitspfadsensoreinheit 21 in Verbindung mit dem Elektronik-Sicherheitspfad bezieht sich insbesondere darauf, dass hierdurch ein separater kompletter Signalpfad ausgebildet wird, der die Sicherheitspfadsensoreinheit 21 mit umfasst. Die Sicherheitspfadsensoreinheit 21 basiert dabei in der exemplarischen Ausführungsform auf einem unterschiedlichen Messprinzip und ist hier als Hall-Sensor ausgebildet. Demnach ergeben sich auch für die Ansteuerung und Signalrückführung zum Resolver 20 unterschiedliche Signalleitungen des Elektronik-Sicherheitspfads. Dies wird durch einen Signalwandler 40a" für ein Ansteuerungssignal und durch einen Signalwandler 40b" für die Sensorsignalrückführung in den jeweiligen Signalpfaden des Elektronik-Sicherheitspfads repräsentiert. Entsprechend kann auch der Digitalisolator 55" des Elektronik-Sicherheitspfads des Drehwinkelerfassungssystems 1" anders ausgelegt sein als der Digitalisolator 55 des Elektronik-Sicherheitspfads des Drehwinkelerfassungssystems 1'.

Im Übrigen sind die Ausführungen zur zweiten Ausführungsform entsprechend auf die dritte Ausführungsform übertragbar.

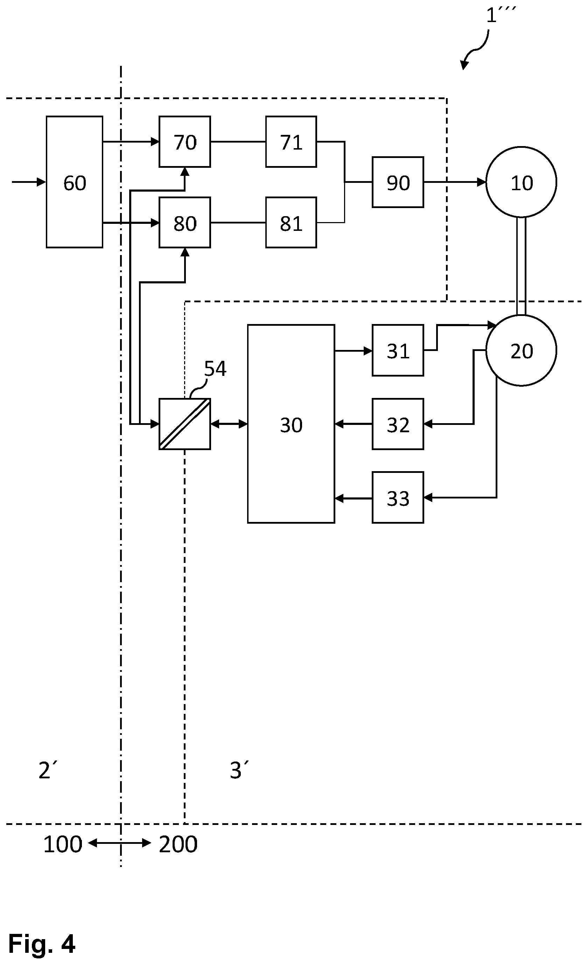

**Fig. 4** zeigt eine schematische Darstellung eines Drehwinkelerfassungssystems 1‴ für ein Schienenfahrzeug gemäß einer beispielhaften vierten Ausführungsform. Das Drehwinkelerfassungssystem 1‴ der vierten Ausführungsform unterscheidet sich von dem Drehwinkelerfassungssystem 1' der zweiten Ausführungsform dadurch, dass das Drehwinkelerfassungssystem 1‴ keinen Elektronik-Sicherheitspfad mit entsprechenden Komponenten aufweist. Eine zumindest teilweise Redundanz erfolgt hier in Bezug auf eine redundante Ausführung der Signalverarbeitungseinheiten 70, 80, die in Parallelschaltung über den Digitalisolator 54 mit dem Resolver-Digital-Wandler 30 verbunden sind. Demnach weist das Drehwinkelerfassungssystem 1‴ zwei identische Schnittstellenverbindungen zu den beiden Signalverarbeitungseinheiten 70, 80, die auch der Ansteuerung dienen, auf. Hierdurch können vermehrt Standardkomponenten eingesetzt werden. Bei Ausfallraten von Digitalisolatoren von beispielsweise ca. 10 FIT erhöht sich damit auch nicht zwangsläufig die Ausfallwahrscheinlichkeit des Gesamtsystems.

Im Übrigen sind die Ausführungen zur zweiten Ausführungsform entsprechend auf die vierte Ausführungsform übertragbar.

### BEZUGSZEICHENLISTE

- 1, 1', 1", 1‴: Drehwinkelerfassungssystem
- 2, 2': Batteriepotential
- 3, 3': Sensoreinheitsgehäuse
- 10: Motor (Bremsantrieb)
- 20: Resolver (Sensoreinheit)
- 21: Sicherheitspfadsensoreinheit (Sensoreinheit)
- 30: Resolver-Digital-Wandler (Elektronik-Hauptpfad)
- 31: Erregungssignalschalter (Elektronik-Hauptpfad)
- 32: Sinussignalschalter (Elektronik-Hauptpfad)
- 33: Cosinussignalschalter (Elektronik-Hauptpfad)
- 40: Resolver-Digital-Wandler (Elektronik-Sicherheitspfad)
- 40a": Signalwandler (Elektronik-Sicherheitspfad)
- 40b": Signalwandler (Elektronik-Sicherheitspfad)
- 41: Erregungssignalschalter (Elektronik-Sicherheitspfad)
- 42: Sinussignalschalter (Elektronik-Sicherheitspfad)
- 43: Cosinussignalschalter (Elektronik-Sicherheitspfad)
- 51: Erregungssignaltransformator
- 52: Sinussignaltransformator
- 53: Cosinussignaltransformator
- 54: Digitalisolator (Elektronik-Hauptpfad)
- 55, 55": Digitalisolator (Elektronik-Sicherheitspfad)
- 60: Spannungsversorgung
- 70: Signalverarbeitungseinheit (Elektronik-Hauptpfad)
- 71: Signalausgangsschalter (Elektronik-Hauptpfad)
- 80: Signalverarbeitungseinheit (Elektronik-Sicherheitspfad)
- 81: Signalausgangsschalter (Elektronik-Sicherheitspfad)
- 90: Motorantriebssteuerung
- 100: Zug
- 200: Bremsaktuator

## Patentansprüche

1. Drehwinkelerfassungssystem (1, 1', 1", 1‴) für eine Drehwinkelerfassung eines rotatorischen Bremsantriebs (10) für ein Schienenfahrzeug, aufweisend:
zumindest eine Sensoreinheit (20, 21) zur Erfassung eines Drehwinkels, die operativ mit dem rotatorischen Bremsantrieb (10) verbindbar ist, sowie
zumindest einen Elektronik-Hauptpfad zur Übertragung von Ansteuerungssignalen und/oder Sensorsignalen, wobei der zumindest eine Elektronik-Hauptpfad operativ mit der zumindest einen Sensoreinheit (20, 21) verbindbar ist,
**dadurch gekennzeichnet, dass** der zumindest eine Elektronik-Hauptpfad zumindest einen Signalübertrager (51, 52, 53, 54) aufweist, der den Elektronik-Hauptpfad in einen vom Signalübertrager (51, 52, 53, 54) aus der Sensoreinheit (20, 21) zugewandten Elektronik-Hauptpfadabschnitt und einen vom Signalübertrager (51, 52, 53, 54) aus der Sensoreinheit (20, 21) abgewandten Elektronik-Hauptpfadabschnitt unterteilt,
wobei der zumindest eine Signalübertrager (51, 52, 53, 54) dazu konfiguriert ist, die zumindest eine Sensoreinheit (20, 21) galvanisch von dem der Sensoreinheit (20, 21) abgewandten Elektronik-Hauptpfadabschnitt zu trennen.

2. Drehwinkelerfassungssystem (1, 1') nach Anspruch1, wobei das Drehwinkelerfassungssystem (1, 1') ferner aufweist:
zumindest einen Elektronik-Sicherheitspfad zur Übertragung von Ansteuerungssignalen und/oder Sensorsignalen, wobei der zumindest eine Elektronik-Sicherheitspfad operativ mit der zumindest einen Sensoreinheit (20, 21) verbindbar ist,
wobei der zumindest eine Elektronik-Sicherheitspfad zumindest einen Signalübertrager (55, 55") aufweist, der den Elektronik-Sicherheitspfad in einen vom Signalübertrager (55, 55") aus der Sensoreinheit (20, 21) zugewandten Elektronik-Sicherheitspfadabschnitt und einen vom Signalübertrager (55, 55") aus der Sensoreinheit (20, 21) abgewandten Elektronik-Sicherheitspfadabschnitt unterteilt, und
wobei der zumindest eine Signalübertrager (55, 55") dazu konfiguriert ist, die zumindest eine Sensoreinheit (20, 21) galvanisch von dem der Sensoreinheit (20, 21) abgewandten Elektronik-Sicherheitspfadabschnitt zu trennen.

3. Drehwinkelerfassungssystem (1, 1', 1", 1‴) nach Anspruch 1 oder 2, wobei die zumindest eine Sensoreinheit (20, 21) in einem Sensoreinheitsgehäuse (3, 3') angeordnet ist und der zumindest eine Signalübertrager (51, 52, 53, 54, 55, 55") des Elektronik-Hauptpfads und/oder des Elektronik-Sicherheitspfads den Signaleingang und/oder Signalausgang des Elektronik-Hauptpfads und/oder des Elektronik-Sicherheitspfads in und/oder aus dem Sensoreinheitsgehäuse (3, 3') ausbildet.

4. Drehwinkelerfassungssystem (1, 1', 1", 1‴) nach einem der vorhergehenden Ansprüche, wobei der zumindest eine Signalübertrager (51, 52, 53, 54, 55, 55") des Elektronik-Hauptpfads und/oder des Elektronik-Sicherheitspfads ein Signaltransformator (51, 52, 53), ein Digitalisolator (54, 55, 55") oder ein Optokoppler ist oder zumindest einen Signaltransformator (51, 52, 53), einen Digitalisolator (54, 55, 55") und/oder einen Optokoppler aufweist.

5. Drehwinkelerfassungssystem (1, 1', 1", 1‴) nach einem der vorherigen Ansprüche, wobei die zumindest eine Sensoreinheit (20) ein Resolver (20) ist oder zumindest einen Resolver (20) aufweist.

6. Drehwinkelerfassungssystem (1, 1', 1", 1‴) nach Anspruch 5, wobei der Elektronik-Hauptpfad und/oder der Elektronik-Sicherheitspfad zumindest einen Resolver-Digital-Wandler (30, 40) aufweist, der insbesondere dazu ausgebildet ist, einen Rotor des Resolvers (20) magnetisch, bevorzugt mit einer Wechselspannung mit konstanter Amplitude, anzuregen und Sinus- und Cosinussignale eines Stators des Resolvers (20) zu empfangen.

7. Drehwinkelerfassungssystem (1, 1', 1", 1‴) nach Anspruch 6, wobei zwischen dem Resolver-Digital-Wandler (30, 40) im Elektronik-Hauptpfad und/oder im Elektronik-Sicherheitspfad und dem Resolver (20) zumindest ein Erregungssignalschalter (31, 41) zur Trennung und Verbindung des Resolver-Digital-Wandlers (30, 40) und des Resolvers (20) in Bezug auf einen Erregungssignalpfad im Elektronik-Hauptpfad und/oder Elektronik-Sicherheitspfad angeordnet ist, zumindest ein Sinussignalschalter (32, 42) zur Trennung und Verbindung des Resolver-Digital-Wandlers (30, 40) und des Resolvers (20) in Bezug auf einen Sinussignalpfad im Elektronik-Hauptpfad und/oder Elektronik-Sicherheitspfad angeordnet ist und/oder zumindest ein Cosinussignalschalter (33, 43) zur Trennung und Verbindung des Resolver-Digital-Wandlers (30, 40) und des Resolvers (20) in Bezug auf einen Cosinussignalpfad im Elektronik-Hauptpfad und/oder Elektronik-Sicherheitspfad angeordnet ist.

8. Drehwinkelerfassungssystem (1, 1', 1", 1‴) nach Anspruch 6 oder 7, wobei der zumindest eine Resolver-Digital-Wandler (30, 40) und/oder eine Signalverarbeitungseinheit (70, 80) dazu ausgebildet ist/sind, aus den Sinus- und Cosinussignalen des Stators des Resolvers (20), insbesondere unter Berücksichtigung einer Polpaarzahl des Resolvers (20), eine Drehwinkelposition des Resolvers (20) zu bestimmen.

9. Drehwinkelerfassungssystem (1, 1', 1", 1‴) nach einem der vorhergehenden Ansprüche, wobei der zumindest eine Resolver-Digital-Wandler (30, 40) im Elektronik-Hauptpfad und/oder im Elektronik-Sicherheitspfad in dem der Sensoreinheit (20, 21) zugewandten Elektronik-Hauptpfadabschnitt bzw. Elektronik-Sicherheitspfadabschnitt angeordnet ist.

10. Drehwinkelerfassungssystem (1") nach einem der Ansprüche 2 bis 9, wobei das Drehwinkelerfassungssystem (1") zumindest eine Sensoreinheit (20) und als weitere Sensoreinheit eine Sicherheitspfadsensoreinheit (21) aufweist, wobei der zumindest eine Elektronik-Sicherheitspfad operativ mit der Sicherheitssensoreinheit (21) verbindbar ist.

11. Drehwinkelerfassungssystem (1") nach Anspruch 10, wobei die Sensoreinheit (20) und die Sicherheitspfadsensoreinheit (21) ein voneinander unterschiedliches Messprinzip oder eine voneinander unterschiedliche Messkonfiguration aufweisen.

12. Drehwinkelerfassungssystem (1, 1', 1", 1‴) nach einem der vorhergehenden Ansprüche, wobei das Drehwinkelerfassungssystem (1, 1', 1", 1‴) zumindest eine Signalverarbeitungseinheit (80) in dem Elektronik-Hauptpfad in dem der Sensoreinheit (20, 21) abgewandten Elektronik-Hauptpfadabschnitt und zumindest eine Signalverarbeitungseinheit (70) in dem Elektronik-Sicherheitspfad in dem der Sensoreinheit (20, 21) abgewandten Elektronik-Sicherheitspfadabschnitt aufweist.

13. Drehwinkelerfassungssystem (1‴) nach einem der Ansprüche 1 bis 11, wobei das Drehwinkelerfassungssystem (1‴) zumindest eine Signalverarbeitungseinheit (80) und zumindest eine weitere Signalverarbeitungseinheit (70) in dem Elektronik-Hauptpfad in dem der Sensoreinheit (20, 21) abgewandten Elektronik-Hauptpfadabschnitt aufweist, und wobei die zumindest eine Signalverarbeitungseinheit (80) und die zumindest eine weitere Signalverarbeitungseinheit (70) parallel geschaltet sind.

14. Bremssystem für ein Schienenfahrzeug, aufweisend:
zumindest einen Bremsaktuator (200) zur Aufbringung einer Bremskraft,
zumindest einen rotatorischen Bremsantrieb (10) zur Betätigung des Bremsaktuators sowie
zumindest ein Drehwinkelerfassungssystem (1, 1', 1", 1‴) nach einem der Ansprüche 1 bis 13.

15. Schienenfahrzeug mit zumindest einem Drehwinkelerfassungssystem (1, 1', 1", 1‴) nach einem der Ansprüche 1 bis 13 und/oder einem Bremssystem nach Anspruch 14,
wobei zumindest die Sensoreinheit (20,21) in einem Drehgestell des Schienenfahrzeugs angeordnet ist.

## Claims

1. A rotational angle detection system (1, 1', 1", 1‴) for a rotational angle detection of a rotary brake drive (10) for a rail vehicle, having:
at least one sensor unit (20, 21) for detecting a rotational angle, which can be operatively connected to the rotary brake drive (10), and
at least one main electronic path for the transmission of control signals and/or sensor signals, wherein the at least one main electronic path can be operatively connected to the at least one sensor unit (20, 21),
**characterized in that** the at least one main electronic path has at least one signal transmitter (51, 52, 53, 54) which divides the main electronic path into a section of the main electronic path facing the sensor unit (20, 21) from the signal transmitter (51, 52, 53, 54) and a section of the main electronic path facing away from the sensor unit (20, 21) from the signal transmitter (51, 52, 53, 54), and
wherein the at least one signal transmitter (51, 52, 53, 54) is configured to galvanically isolate the at least one sensor unit (20, 21) from the section of the main electronic path facing away from the sensor unit (20, 21).

2. The rotational angle detection system (1, 1') as claimed in claim 1, wherein the rotational angle detection system (1, 1') further has:
at least one safety electronic path for the transmission of control signals and/or sensor signals, wherein the at least one safety electronic path can be operatively connected to the at least one sensor unit (20, 21),
wherein the at least one safety electronic path has at least one signal transmitter (55, 55"), which divides the safety electronic path into a section of the safety electronic path facing the sensor unit (20, 21) from the signal transmitter (55, 55") and a section of the safety electronic path facing away from the sensor unit (20, 21) from signal transmitter (55, 55"),
wherein the at least one signal transmitter (55, 55") is configured to galvanically isolate the at least one sensor unit (20, 21) from the section of the safety electronic path facing away from the sensor unit (20, 21).

3. The rotational angle detection system (1, 1', 1", 1‴) as claimed in claim 1 or 2, wherein the at least one sensor unit (20, 21) is arranged in a sensor unit housing (3, 3') and the at least one signal transmitter (51, 52, 53, 54, 55, 55") of the main electronic path and/or the safety electronic path forms the signal input and/or signal output of the main electronic path and/or the safety electronic path into and/or out of the sensor unit housing (3, 3').

4. The rotational angle detection system (1, 1', 1", 1‴) according to any one of the preceding claims, wherein the at least one signal transmitter (51, 52, 53, 54, 55, 55") of the main electronic path and/or the safety electronic path is a signal transformer (51, 52, 53), a digital isolator (54, 55, 55") or an optical coupler or has at least one signal transformer (51, 52, 53), a digital isolator (54, 55, 55") and/or an optical coupler.

5. The rotational angle detection system (1, 1', 1", 1‴) according to any one of the preceding claims, wherein the at least one sensor unit (20) is a resolver (20) or has at least one resolver (20).

6. The rotational angle detection system (1, 1', 1", 1‴) as claimed in claim 5, wherein the main electronic path and/or the safety electronic path has at least one resolver to digital converter (30, 40) which is specifically designed to magnetically excite a rotor of the resolver (20), preferably with an alternating voltage of constant amplitude, and to receive sine and cosine signals of a stator of the resolver (20).

7. The rotational angle detection system (1, 1', 1", 1‴) as claimed in claim 6, wherein between the resolver to digital converter (30, 40) in the main electronic path and/or in the safety electronic path and the resolver (20) at least one excitation signal switch (31, 41) is arranged for disconnecting and connecting the resolver to digital converter (30, 40) and the resolver (20) with respect to an excitation signal path in the main electronic path and/or safety electronic path, at least one sine signal switch (32, 42) for disconnecting and connecting the resolver to digital converter (30, 40) and the resolver (20) with respect to a sine signal path in the main electronic path and/or safety electronic path and/or at least one cosine signal switch (33, 43) for disconnecting and connecting the resolver to digital converter (30, 40) and the resolver (20) with respect to a cosine signal path in the main electronic path and/or safety electronic path.

8. The rotational angle detection system (1, 1', 1", 1‴) as claimed in claim 6 or 7, wherein the at least one resolver to digital converter (30, 40) and/or one signal processing unit (70, 80) is/are designed to determine a rotational angle position of the resolver (20) from the sine and cosine signals of the stator of the resolver (20), in particular taking into account a number of pole pairs of the resolver (20).

9. The rotational angle detection system (1, 1', 1", 1‴) as claimed in any one of the preceding claims, wherein the at least one resolver to digital converter (30, 40) is located in the main electronic path and/or in the safety electronic path in the section of the main electronic path or the section of the safety electronic path facing the sensor unit (20, 21).

10. The rotational angle detection system (1") as claimed in any one of claims 2 to 9, wherein the rotational angle detection system (1") comprises at least one sensor unit (20) and a safety path sensor unit (21) as a further sensor unit, wherein the at least one safety electronic path can be operatively connected to the safety sensor unit (21).

11. The rotational angle detection system (1") as claimed in claim 10, wherein the sensor unit (20) and the safety path sensor unit (21) have a mutually different measuring principle or a mutually different measuring configuration.

12. The rotational angle detection system (1, 1', 1", 1‴) as claimed in any one of the preceding claims, wherein the rotational angle detection system (1, 1', 1", 1‴) comprises at least one signal processing unit (80) in the main electronic path in the section of the main electronic path facing away from the sensor unit (20, 21) and at least one signal processing unit (70) in the safety electronic path in the section of the safety electronic path facing away from the sensor unit (20, 21).

13. The rotational angle detection system (1‴) as claimed in any one of claims 1 to 11, wherein the rotational angle detection system (1‴) comprises at least one signal processing unit (80) and at least one further signal processing unit (70) in the main electronic path in the section of the main electronic path facing away from the sensor unit (20, 21), and wherein the at least one signal processing unit (80) and the at least one further signal processing unit (70) are connected in parallel.

14. A braking system for a rail vehicle, having:
at least one brake actuator (200) for applying a braking force,
at least one rotary brake drive (10) for actuating the brake actuator, and
at least one rotational angle detection system (1, 1', 1", 1‴) as claimed in any one of claims 1 to 13.

15. A rail vehicle with at least one rotational angle detection system (1, 1', 1", 1‴) as claimed in any one of claims 1 to 13 and/or a braking system as claimed in claim 14,
wherein at least the sensor unit (20, 21) is arranged in a bogie of the rail vehicle.

## Revendications

1. Système de détection d'angle de rotation (1, 1', 1", 1'") pour une détection d'angle de rotation d'un entraînement de freinage (10) rotatif pour un véhicule ferroviaire présentant :
au moins une unité de capteur (20, 21) pour la détection d'un angle de rotation qui peut être relié de manière opérationnelle à l'entraînement de freinage (10) rotatif, ainsi que
au moins un chemin principal électronique pour la transmission de signaux de commande et/ou de signaux de capteur, dans lequel l'au moins un chemin principal électronique peut être relié de manière opérationnelle à l'au moins une unité de capteur (20, 21),
**caractérisé en ce que** l'au moins un chemin principal électronique présente au moins un émetteur de signal (51, 52, 53, 54) qui divise le chemin principal électronique en une section de chemin principal électronique tournée vers l'unité de capteur (20, 21) depuis l'émetteur de signal (51, 52, 53, 54) et en une section de chemin principal électronique éloignée de l'unité de capteur (20, 21) depuis l'émetteur de signal (51, 52, 53, 54),
dans lequel l'au moins un émetteur de signal (51, 52, 53, 54) est configuré afin de séparer galvaniquement l'au moins une unité de capteur (20, 21) de la section de chemin principal électronique éloignée de l'unité de capteur (20, 21).

2. Système de détection d'angle de rotation (1, 1') selon la revendication 1, dans lequel le système de détection d'angle de rotation (1, 1') présente de plus :
au moins un chemin de sécurité électronique pour la transmission de signaux de commande et/ou de signaux de capteur, dans lequel l'au moins un chemin de sécurité électronique peut être relié de manière opérationnelle à l'au moins une unité de capteur (20, 21),
dans lequel l'au moins un chemin de sécurité électronique présente au moins un émetteur de signal (55, 55") qui divise le chemin de sécurité électronique en une section de chemin de sécurité électronique tournée vers l'unité de capteur (20, 21) depuis l'émetteur de signal (55, 55") et en une section de chemin de sécurité électronique éloignée de l'unité de capteur (20, 21) depuis l'émetteur de signal (55, 55"), et
dans lequel l'au moins un émetteur de signal (55, 55") est configuré afin de séparer galvaniquement l'au moins une unité de capteur (20, 21) de la section de chemin de sécurité électronique éloignée de l'unité de capteur (20, 21).

3. Système de détection d'angle de rotation (1, 1', 1", 1"') selon la revendication 1 ou 2, dans lequel l'au moins une unité de capteur (20, 21) est agencée dans un boîtier d'unité de capteur (3, 3') et l'au moins un émetteur de signal (51, 52, 53, 54, 55, 55") du chemin principal électronique et/ou du chemin de sécurité électronique configure l'entrée de signal et/ou la sortie de signal du chemin principal électronique et/ou du chemin de sécurité électronique dans et/ou hors du boîtier d'unité de capteur (3, 3').

4. Système de détection d'angle de rotation (1, 1', 1", 1"') selon l'une quelconque des revendications précédentes, dans lequel l'au moins un émetteur de signal (51, 52, 53, 54, 55, 55") du chemin principal électronique et/ou du chemin de sécurité électronique est un transformateur de signal (51, 52, 53), un isolateur numérique (54, 55, 55") ou un optocoupleur ou présente au moins un transformateur de signal (51, 52, 53), un isolateur numérique (54, 55, 55") et/ou un optocoupleur.

5. Système de détection d'angle de rotation (1, 1', 1", 1"') selon l'une quelconque des revendications précédentes, dans lequel l'au moins une unité de capteur (20) est un résolveur (20) ou présente au moins un résolveur (20).

6. Système de détection d'angle de rotation (1, 1', 1", 1"') selon la revendication 5, dans lequel le chemin principal électronique et/ou le chemin de sécurité électronique présente au moins un convertisseur numérique de résolveur (30, 40) qui est configuré en particulier afin d'exciter un rotor du résolveur (20) de manière magnétique, de préférence avec une tension alternative avec une amplitude constante et de recevoir des signaux de sinus et de cosinus d'un stator du résolveur (20).

7. Système de détection d'angle de rotation (1, 1', 1", 1"') selon la revendication 6, dans lequel au moins un commutateur de signal d'excitation (31, 41) est agencé entre le convertisseur numérique de résolveur (30, 40) dans le chemin principal électronique et/ou le chemin de sécurité électronique et le résolveur (20) pour la séparation et la liaison du convertisseur numérique de résolveur (30, 40) et du résolveur (20) par rapport à un chemin de signal d'excitation dans le chemin principal électronique et/ou le chemin de sécurité électronique, au moins un commutateur de signal de sinus (32, 42) est agencé pour la séparation et la liaison du convertisseur numérique de résolveur (30, 40) et du résolveur (20) par rapport à un chemin de signal de sinus dans le chemin principal électronique et/ou le chemin de sécurité électronique et/ou au moins un commutateur de signal de cosinus (33, 43) est agencé pour la séparation et la liaison du convertisseur numérique de résolveur (30, 40) et du résolveur (20) par rapport à un chemin de signal de cosinus dans le chemin principal électronique et/ou le chemin de sécurité électronique.

8. Système de détection d'angle de rotation (1, 1', 1", 1"') selon la revendication 6 ou 7, dans lequel l'au moins un convertisseur numérique de résolveur (30, 40) et/ou une unité de traitement de signal (70, 80) est configurée afin de déterminer une position d'angle de rotation du résolveur (20) à partir des signaux de sinus et de cosinus du stator du résolveur (20), en particulier en tenant compte d'un nombre de paire de pôles du résolveur (20).

9. Système de détection d'angle de rotation (1, 1', 1", 1"') selon l'une quelconque des revendications précédentes, dans lequel l'au moins un convertisseur numérique de résolveur (30, 40) est agencé dans le chemin principal électronique et/ou le chemin de sécurité électronique dans la section de chemin principal ou la section de chemin de sécurité électronique tournée vers l'unité de capteur (20, 21).

10. Système de détection d'angle de rotation (1") selon l'une quelconque des revendications 2 à 9, dans lequel le système de détection d'angle de rotation (1") présente au moins une unité de capteur (20) et comme autre unité de capteur une unité de capteur de chemin de sécurité (21), dans lequel l'au moins un chemin de sécurité électronique peut être relié de manière opérationnelle à l'unité de capteur de sécurité (21).

11. Système de détection d'angle de rotation (1") selon la revendication 10, dans lequel l'unité de capteur (20) et l'unité de capteur de chemin de sécurité (21) présentent un principe de mesure différent l'un de l'autre ou une configuration de mesure différente l'une de l'autre.

12. Système de détection d'angle de rotation (1, 1', 1", 1"') selon l'une quelconque des revendications précédentes, dans lequel le système de détection d'angle de rotation (1, 1', 1", 1'") présente au moins une unité de traitement de signal (80) dans le chemin principal électronique dans la section de chemin principal électronique éloignée de l'unité de capteur (20, 21) et au moins une unité de traitement de signal (70) dans le chemin de sécurité électronique dans la section de chemin de sécurité électronique éloignée de l'unité de capteur (20, 21).

13. Système de détection d'angle de rotation (1") selon l'une quelconque des revendications 1 à 11, dans lequel le système de détection d'angle de rotation (1"') présente au moins une unité de traitement de signal (80) et au moins une autre unité de traitement de signal (70) dans le chemin principal électronique dans la section de chemin principal électronique éloignée de l'unité de capteur (20, 21), et dans lequel l'au moins une unité de traitement de signal (80) et l'au moins une autre unité de traitement de signal (70) sont montées en parallèle.

14. Système de freinage pour un véhicule ferroviaire présentant :
au moins un actionneur de freinage (200) pour l'application d'une force de freinage,
au moins un entraînement de freinage (10) rotatif pour l'actionnement de l'actionneur de freinage ainsi que
au moins un système de détection d'angle de rotation (1, 1', 1", 1"') selon l'une quelconque des revendications 1 à 13.

15. Véhicule ferroviaire avec au moins un système de détection d'angle de rotation (1, 1', 1", 1"') selon l'une quelconque des revendications 1 à 13 et/ou un système de freinage selon la revendication 14,
dans lequel au moins l'unité de capteur (20,21) est agencée dans un bogie du véhicule ferroviaire.
